# EUROPÄISCHE PATENTANMELDUNG

(11) **EP 1 294 162 A1**
(43) Veröffentlichungstag der Anmeldung: **19.03.2003**
(21) Anmeldenummer: 01122115.7
(22) Anmeldetag: 14.09.2001
(51) Int. Cl.: H04M 3/42, G06F 17/60

(54) **Method and system for communicating with travelers**

(71) Anmelder: SIEMENS AKTIENGESELLSCHAFT, 80333 München (DE)
(72) Erfinder: Baumgarten, Hans-Georg, 81667 München (DE); Fricke, Hans-Christian, 31224 Peine (DE); Heimannsfeld, Klaus, 81671 München (DE); Schwab, Christof, 84085 Landquaid (DE)

(57) **Zusammenfassung**

Die Erfindung betrifft Verfahren und Vorrichtungen zur Kontaktaufnahme mit einem reisenden Telekommunikationsteilnehmer während dessen Reise über ein von ihm präferiertes Endgerät.

Aufgabe der vorliegenden Erfindung ist es, möglichst einfach und effizient eine Kontaktaufnahme zu einem reisenden Telekommunikationsteilnehmer über ein von diesem für den jeweils aktuellen Reiseabschnitt der Reise präferiertes Endgerät zu ermöglichen.

Im Falle eines durch einen beliebigen weiteren Telekommunikationsteilnehmer initiierten Kontaktaufnahmewunsches zu dem reisenden Telekommunikationsteilnehmer (beispielsweise für eine Sprachkommunikation) wird erfindungsgemäß eine kontaktaufnahme zum Telekommunikationsteilnehmer zur für den aktuellen (=vom Telekommunikationsteilnehmer gerade durchlaufenden) Reiseabschnitt der Reise präferierten Endgerät-Telekommunikationsadresse unter vom Telekommunikationsteilnehmer vorgegebenen Bedingungen versucht.

## Beschreibung

Die Erfindung betrifft Verfahren und Vorrichtungen zur Kontaktaufnahme mit einem reisenden Telekommunikationsteilnehmer während dessen Reise über ein von ihm präferiertes Endgerät.

Aufgabe der vorliegenden Erfindung ist es, möglichst einfach und effizient eine Kontaktaufnahme zu einem reisenden Telekommunikationsteilnehmer über ein von diesem für den jeweils aktuellen Reiseabschnitt der Reise präferiertes Endgerät zu ermöglichen. Dies wird jeweils durch die Gegenstände der unabhängigen Ansprüche ermöglicht.

Im Falle eines durch einen beliebigen weiteren Telekommunikationsteilnehmer initiierten Kontaktaufnahmewunsches zu dem reisenden Telekommunikationsteilnehmer (beispielsweise für eine Sprachkommunikation) wird erfindungsgemäß eine Kontaktaufnahme zum Telekommunikationsteilnehmer zur für den aktuellen (= vom Telekommunikationsteilnehmer gerade durchlaufenden) Reiseabschnitt der Reise präferierten Endgerät-Telekommunikationsadresse unter vom Telekommunikationsteilnehmer vorgegebenen Bedingungen versucht. Wenn beispielsweise der Telekommunikationsteilnehmer angegeben hat, grundsätzlich im Zug tagsüber erreichbar sein zu wollen, wird, wenn festgestellt wird, dass es sich aktuell in einem Reiseabschnitt im Zug befindet, ein aktuell einlangender Kontaktaufnahmewunsch eines anderen Telekommunikationsteilnehmers zum reisenden Telekommunikationsteilnehmer zu der für einen Reiseabschnitt im Zug gewünschten Endgerät-Telekommunikationsadresse (beispielsweise Mobiltelefon) tags weitergeschaltet und nachts nicht zum Reisenden weitergeschaltet, sondern beispielsweise auf eine Ansageeinrichtung weitergeschaltet, welche ansagt, wann aufgrund des geplanten und/oder tatsächlich erfolgenden Reiseverlaufes und unter welcher Endgerätstelekommunikationsadresse der reisende Telekommunikationsteilnehmer voraussichtlich erreichbar sein wird. Die Erreichbarkeit kann also u.a. aufgrund der Gattung von Transportmitteln (beispielsweise Zug oder Flugzeug oder Auto etc.) und aufgrund der Gattungen von Transportmitteln vom reisenden präferierten (=bevorzugten) Endgeräte und/oder Bedingungen festgelegt werden.

Zweckmäßig werden für eine Reise eines reisenden Telekommunikationsteilnehmers den Sollverlauf der Reise (beispielsweise mit dem Auto zur S-Bahn, mit der S-Bahn zum Flughafen, mit dem Flugzeug zu einem weiteren Flughafen und mit einem weiteren Flugzeug zum Zielort) repräsentierende Reisemodell-Solldaten generiert.
Während einer Reise können Reiseabschnittssteuerungdaten durch Vergleich des (per GPRS etc) erfaßten Istverlaufs einer Reise mit dem gespeicherten Sollverlauf der Reise aktualisiert werden und die derart aktualisierten Reiseabschnittssteuerungsdaten für die Bestimmung der jeweils aktuell (unter vorgebbaren Bedingungen) erreichbaren Endgerät-Telekommunikationsadresse verwendet werden, um die Erreichbarkeit des Teilnehmers durch Berücksichtigung eventueller Änderungen des Reiseplanes während der Reise gemäß seinen Wünschen zu optimieren.

Während einer Reise kann ein Telekommunikationsteilnehmer über unterschiedliche Arten von Endgeräten auf unterschiedlichen Reiseabschnitten (und unter unterschiedlichen Bedingungen) erreichbar sein (beispielsweise im Kraftfahrzeug über eine erste Mobilfunkadresse, in der S-Bahn über eine zweite Mobilfunkadresse, auf dem Weg von der S-Bahn zum Gate des Flugzeuges über die gleiche zweite Mobilfunkadresse und/oder ein LAN im Flughafen, und im Flugzeug überhaupt nicht etc.). Vorzugsweise werden während einer Reise geplante Transportmittel repräsentierende Reiseabschnittstransportmitteldaten effizient aus Buchungsdaten betreffend dieser Reise generiert, welche beispielsweise vom Reiseveranstalter in einem vorgegebenen Format abgerufen und automatisiert berücksichtigt werden können.

Daten betreffend Präferenzen des Reisenden können effizient und automatisiert aus Daten zu bisherigen Reisen und/oder Erreichbarkeiten des Reisenden und/oder aus vom Reisenden abgefragten Eingaben generiert werden.

Präferenzen eines Reisenden umfassen zweckmäßig Daten zu vom Reisenden in bestimmten Transportmitteln und/oder zu bestimmten Zeitpunkten und/oder unter bestimmten weiteren Bedingungen bevorzugten Endgeräten.

Überdies umfassen sie zweckmäßig Telekommunikationsadressen von Endgeräten in Besitz des Reisenden (Telefonnummer/Email/SMS/sonstige Nummer eines Mobilfunkendgerätes des Reisenden) und/oder von Endgeräten welche nicht im Besitz des Reisenden sind, wie LAN-Anschlüsse an einen Flughafen, Adressen, über welche Durchsagen an den Reisenden in einem Flughafen etc. veranlasst werden können, etc.

Weitere Merkmale und Vorteile der Erfindung ergeben sich aus den Ansprüchen und der nachfolgenden Beschreibung eines Ausführungsbeispiels anhand der Zeichnung.

Dabei zeigt
- Figur 1: als sehr vereinfachtes Schema ein Beispiel zur Ausführung der Erfindung.
- Figur 2: die Generierung und Verwendung von Daten zur erfindungsgemäßen Reiseerreichbarkeitssteuerung
- Figur 3: Abhängigkeiten verwendeter Daten voneinander
- Figuren 4, 4a: Details zu Daten betreffend einen Reiseabschnitt
- Figuren 5, 5a: Daten betreffend einen Reisenden
- Figur 6: ein Reisemodell zur Steuerung der Erreichbarkeit auf einer Reise
- Figur 7: eine Reisestatustabelle mit Istwerten für die Reiseabschnittserreichbarkeitssteuerungsdaten

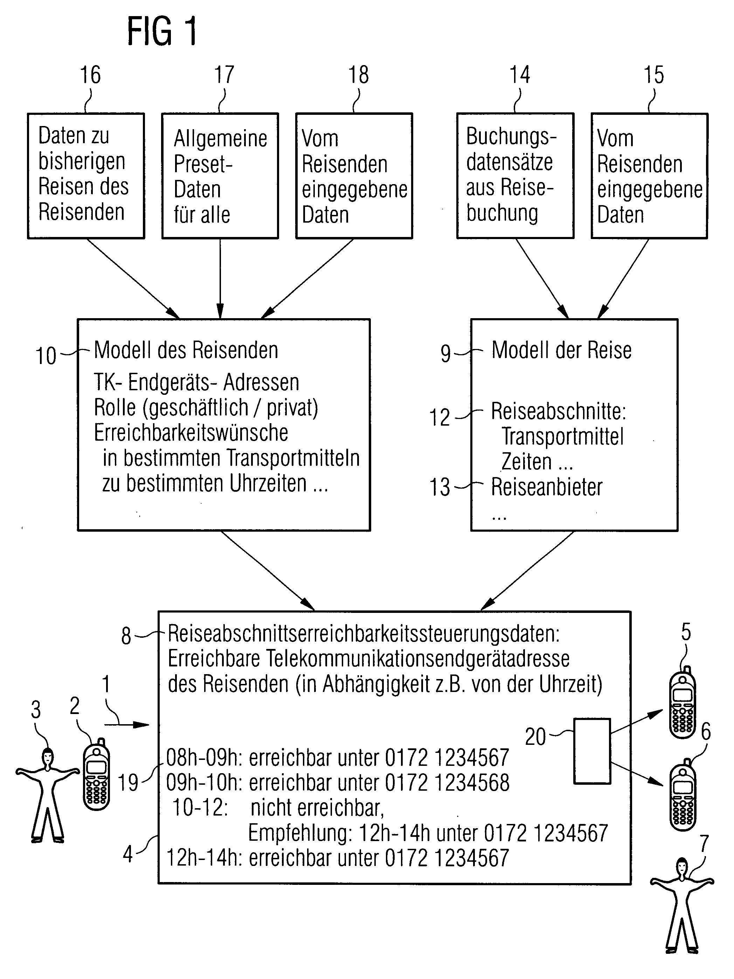

Figur 1 zeigt einen Kontaktaufnahmeversuch (Anrufversuch) 1 eines Endgerätes 2 eines Anrufers 3, welcher (1) entweder direkt bei einem Reiseerreichbarkeitssteuerungsmodell-Computer 4 eines Telekommunikationsproviders eingeht oder zu diesem weitergeschaltet wird, worauf der Reiseerreichbarkeitssteuerungsmodell-Computer 4 überprüft, unter welcher Telekommunikationsadresse ein reisender Telekommunikationsteilnehmer aktuell erreichbar ist und an die aktuell erreichbare Telekommunikationsadresse (beispielsweise Telefonnummer am Flughafen zur Entgegennahme von Durchsagen betreffend einen Reisenden oder Mobilfunktelefonnummer eines Mobiltelefones 5 des Reisenden oder Mobiltelefonnummer eines Auto-Mobiltelefones 6 des Reisenden) den Anruf 1 des Anrufers 2 versucht durchzuschalten. Der Computer 4 verfügt über Reiseabschnittserreichbarkeitssteuerungsdaten 8, 19 welche angeben unter welcher Telekommunikationsadresse eines Endgerätes 5, 6 der Reisende 7 gerade erreichbar sein sollte.

De Reiseabschnittserreichbarkeitssteuerungsdaten 8, 19 können ferner Angaben betreffend Ansagen für den Reisenden anrufende Telekommunikationsteilnehmer umfassen, welche Ansagen beispielsweise eingespielt werden können, wenn der Reisende im aktuellen Reiseabschnitt nicht erreichbar ist (z.B. in einem Flugzeug ohne Kommunikationsmöglichkeiten für den Reisenden) oder einen trotz prinzipieller Erreichbarkeit im Reiseabschnitt (z.B. im Auto) einen Anruf nicht annimmt, wobei Ansagen angeben können wann und unter welcher Endgeräts-Telekommunikationsadresse der Reisende künftig erreichbar sein wird.
Alternativ oder zusätzlich kann eine Kontaktaufnahme zum Reisenden zu einem späteren Zeitpunkt automatisch durchgeführt werden, wobei die Kontaktaufnahme zu diesem späteren Zeitpunkt zur für den jeweiligen Reiseabschnitt des späteren Zeitpunkts gültigen, aus Reiseabschnittssteuerungsdaten zu bestimmenden Endgeräts- Telekommunikationsadresse erfolgt.

Zweckmäßig werden Daten zu Kontaktaufnahmeversuchen (z.B. Telekommunikationsdressen von Telekommunikationsteilnehmern) gesammelt und dem Reisenden, wenn er wieder erreichbar ist, zur für den jeweiligen Reiseabschnitt des späteren Zeitpunkts gültigen, aus Reiseabschnittssteuerungsdaten zu bestimmenden Endgeräts- Telekommunikationsadresse automatisch (im Push-Verfahren) übermittelt.

Diese Reiseabschnittserreichbarkeitssteuerungsdaten 8,19 können unter Berücksichtigung des aktuellen Zeitpunktes gebildet werden aus Daten 9 betreffend ein Modell der Reise des Reisenden und Daten 10 betreffend Präferenzen des Reisenden.
Die Reise betreffende Daten 9 umfassen Daten zu Reiseabschnitten der Reise, insbesondere Transportmittel, Datumsdaten und Zeitpunkte oder Zeitspannen für den Transport mit den bestimmten Transportmitteln (beispielsweise 8 bis 9 Uhr mit dem Auto zur S-Bahn, 9 bis 10 Uhr mit der S-Bahn zum Flughafen,10 bis 11 Uhr Check- In-Phase, 11 bis 12 Uhr Flug im Flugzeug etc.) mit dem Bezugszeichen 12. Sie können überdies Daten zu Reiseanbietern umfassen, welche beispielsweise ein Aussage darüber zulassen, ob in einem Flugzeug der Reisende per E-mail oder Telefon (über eine Funkeinrichtung des Flugzeugs) erreichbar ist (Bezugszeichen 13).

Ein Modell der Reise betreffende Daten 9 können insbesondere automatisiert und damit effizient aus Buchungsdaten 14 zur Buchung der Reise, welche in der Regel in einem standardisierten Format vorliegen, ausgelesen werden. Weitere Daten 9 betreffend die Reise können beispielsweise aus einer manuellen Korrektur oder Ergänzung durch beispielsweise den Reisenden erfolgen (15).

In die Bestimmung der Reiseabschnittserreichbarkeitssteuerungsdaten 8,19 (in 4) fließen, neben Daten 9 betreffend die Reise, auch Daten 10 betreffend den Reisenden, insbesondere dessen Präferenzen ein. Die Daten 10 betreffend den Reisenden umfassen Daten zu von ihm (beispielsweise für bestimmte Transportmittel) präferierten Endgeräten und/oder Telekommunikationsadressen (beispielsweise Mobiltelefonnummer 1 im Fahrzeug, Mobiltelefonnummer 2 im Zug, Hyperlan über einem Anschluß am Flughafen). In den Daten 10 können ferner Angaben über die Rolle (private oder geschäftliche Reise) des Reisenden enthalten sein, sowie beispielsweise hieraus auch ableitbare Kommunikationsbedürfnisse (Erreichbarkeit auf Geschäftsreisen aber nicht auf Privatreisen etc.).
Die den Reisenden betreffenden Daten 10 können aus Daten 16 zu bisherigen Reisen dieses Reisenden unter der Annahme übernommen werden, dass dessen Präferenzen bezüglich präferierten Endgeräten und/oder Telekommunikationsadressen und/oder Bedingungen (Nacht/Tag/nur im Zug etc.) der Reisende eine Kontaktaufnahme wünscht, sich nicht verändert haben. Ferner können Daten 10 betreffend allgemeine (änderbare) Vorgaben, welche für alle Reisenden grundsätzlich geeignet sind, verwendet werden. Des Weiteren können persönliche Eingaben des Reisenden zu bevorzugten Endgeräts- Telekommunikationsadressen erfolgen. Insbesondere können persönliche Eingaben 18 des Reisenden betreffend Korrekturen oder Ergänzungen zu Daten 10 zu bisherigen Reisen oder allgemeinen Vorgaben für alle Reisenden zu bestimmten Transportmitteln erfolgen. Durch die persönliche Eingabe beispielsweise des Reisenden können die Reiseabschnittserreichbarkeitssteuerungsdaten 10, 19 optimiert an dessen Wünsche angepasst werden.
Ferner können zusätzlich oder alternativ allgemeine Preset-Daten z.B. eines Betreibers eines Services/Rechners (4) zur erfindungsgemäßen Reiseerreichbarkeitssteuerung verwendet werden, die z.B. angeben, zu welcher Gattung von Reiseabschnitten (z.B. im Flugzeug, im Auto, beim Check-in, in der S-Bahn, im Zug usw) welche (mindestens eine) Art von Telekommunikationsendgeräten jeweils verfügbar sein können, wobei z.B. für einen Reiseabschnitt der Gattung "im Auto" ein Autotelefon erreichbar sein kann und die Automobiltelefonadresse eines Reisenden aus persönlichen Eingaben von ihm oder automatisch aus einem öffentlichen Telefonbuch eingelesen werden kann.

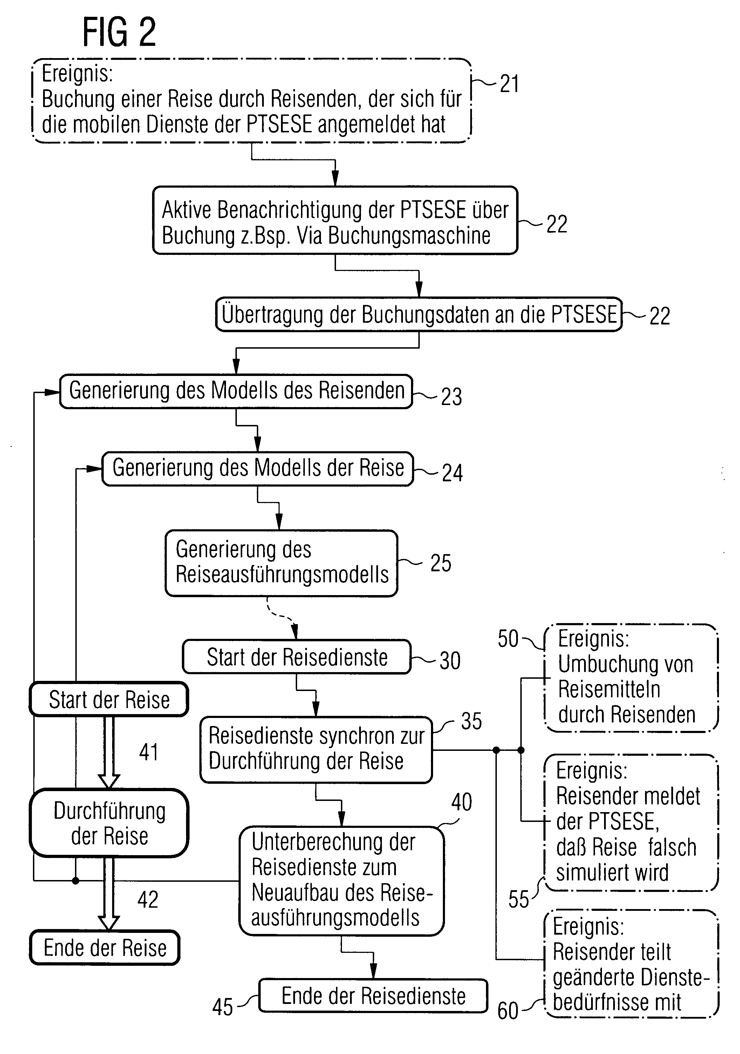

Figuren 2-7 verdeutlichen weitere Details der Erfindung. Ein Reisender, der sich für öffnungsgemäße mobile Dienste bei einem Computer (Fig. 1, Nr 4) angemeldet hat, hat eine Reise gebucht. Eine Nachricht betreffend die Buchung der Reise wird von einer Buchungsmaschine beim Reiseveranstalter oder vom Reisenden an einen die erfindungsgemäßen Dienste ermöglichenden Computer (4) übermittelt (20). Dabei werden auch Buchungsdaten betreffend die Reise (Abflug, Umsteigzeiten, Ankunftszeit) 21 an einen Computer 4 übermittelt (21). Darauf wird ein Modell des Reisenden (Figur 1, Nummer 10) generiert (23) und ein Modell der Reise (Figur 1, Nummer 9) generiert. Dabei kann das Reisendenmodell in das Reisemodell einfließen und das Reisemodell zur Bestimmung von Reiseabschnitterreichbarkeitssteuerungsdaten verwendet werden oder Reiseabschnittserreichbarkeitssteuerungsdaten aus Reisendenmodell und Reisemodell generiert werden. Ein zu bildendes Reiseausführungsmodell (25) kann Reiseabschnittserreichbarkeitssteuerungsdaten (Fig. 1, Nummer 8) zur Verfügung stellen.

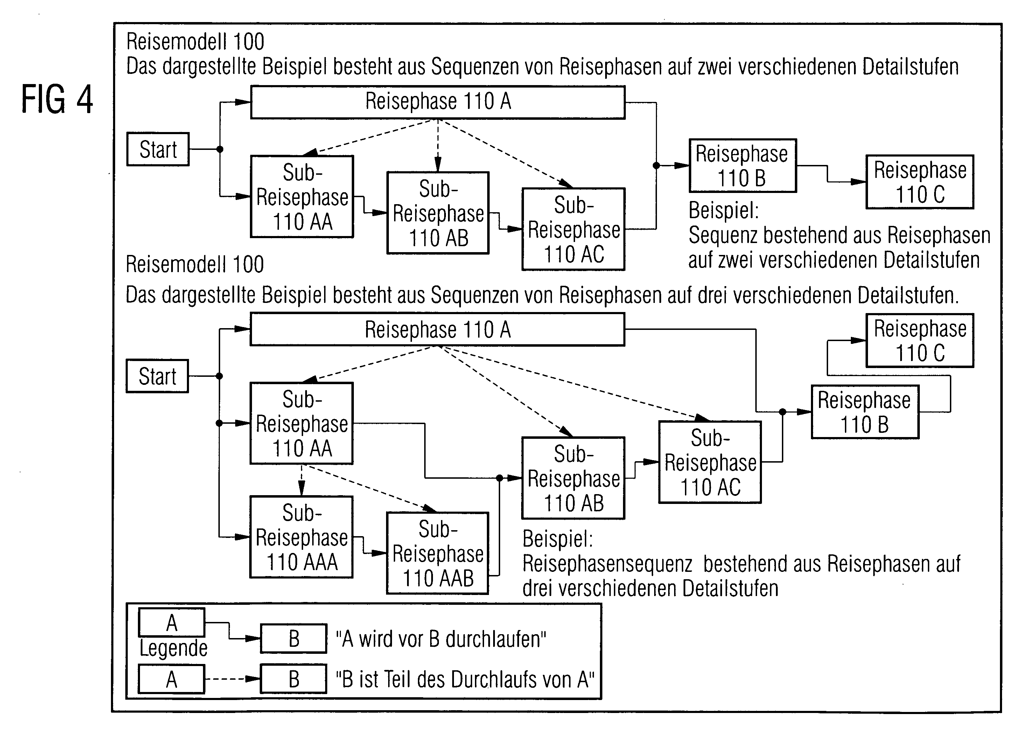

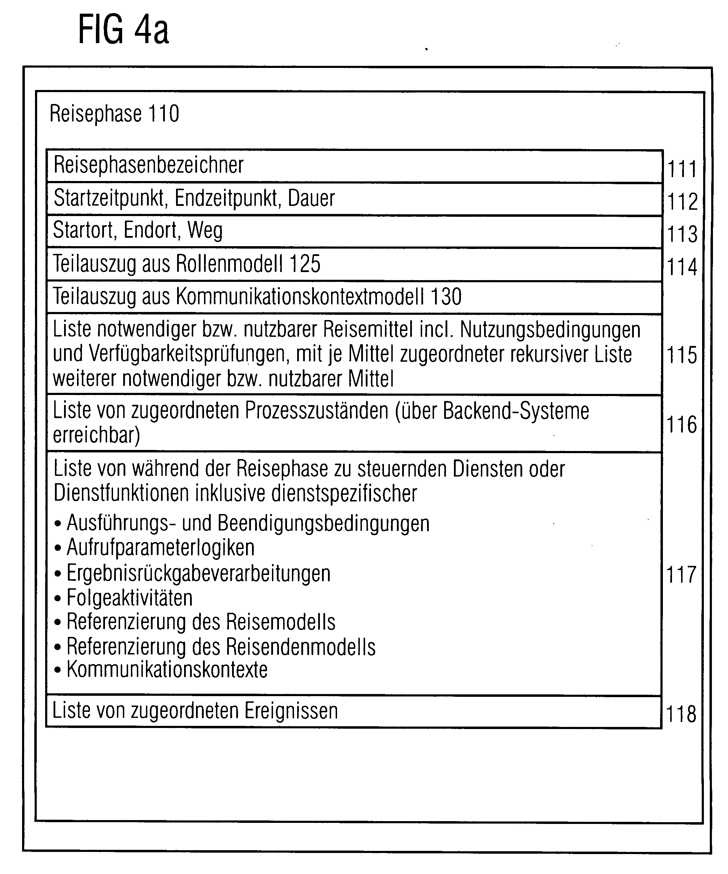

Hieraus werden die Reisedienste (erfindungsgemäße Verfahren zur Kontaktaufnahme mit den Reisenden) automatisch (zum Zeitpunkt des geplanten Reisebeginns) oder beispielsweise auf Anfrage des Reisenden gestartet. Die Reisedienste (Weiterschaltung von Anrufen unter von ihm vorgegebenen Bedingungen auf dem aktuellen Reiseabschnitt vom Reisenden gewünschte Endgerätadresse) werden synchron zur Durchführung der Reise ausgeführt (35). Falls vom Reisenden eine Umbuchung von Reisemitteln erfolgt (und dies von Reiseveranstaltern oder vom Reisenden gemeldet wird), oder falls vom Reisenden die Reiseerreichbarkeitsteuerungscomputer (Figur 1, 4)gemeldet wird, dass die Reise (9) falsch formuliert ist (55) oder falls ein Reisender geänderte Dienstbedürfnisse (beispielsweise keine Erreichbarkeit mehr nach 22 Uhr oder keine Erreichbarkeit im Zug) den Reiseerreichbarkeitssteuerungscomputer (4) mitteilt, wird im Schritt 40 ein Neuaufbau des Reiseausführungsmodells (in Phasen der Reiseerreichbarkeitssteuerungsdaten) ausgelöst. Derart wird während der Durchführung 41 der Reise gewährleistet, dass der Reisende möglichst aktualisiert hinsichtlich Änderungen der Reise oder Änderung seiner Wünsche erreichbar ist. Nach einem Ende der Reise 42 enden auch (45) die erfindungsgemäßen die Erreichbarkeit betreffenden Reisedienste.

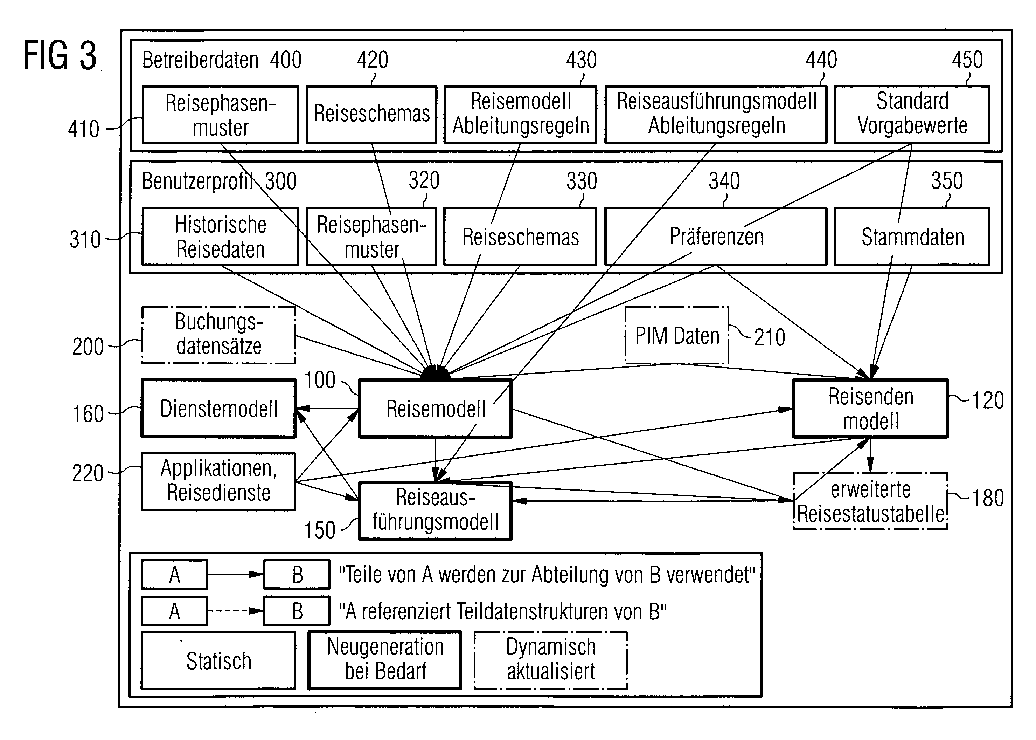

Figur 3 beschreibt beispielhaft mögliche Abhängigkeiten der erfindungsgemäßen Datenmodelle. So fließen insbesondere Betreiberdaten, allgemeine Reiseschemas (die angeben wie eine Reise im allgemeinen abläuft), allgemeine Reisemodellableitungsregeln (die angeben wie aus Reisedaten und Reisenden Daten ein Modell einer Reise bestimmbar ist) in ein Reisemodell ein.

Figuren 4, 4a zeigen ein beispielhaftes Datenmodell einer Reisephase als Teil eines Modells der Reise. Figur 4 zeigt beispielhaft, dass eine Reisephase wie beispielsweise ein Flug aus mehreren Subreisephasen 110aa, 110ab und 110ac zur Reisephase 110a bestehen kann, also beispielsweise für einen Flug 110a den Check-In den Transport mit einem Shuttle-Bus zum Flug 110ab, und den Flug selbst 110ac etc., wobei sich an den Flug 110a eine Reisephase 110b beispielsweise mit dem Zug in eine Reisephase 110c beispielsweise im Hotel anschließt. Dabei können Reisephasen auch weiter untergliedert werden.

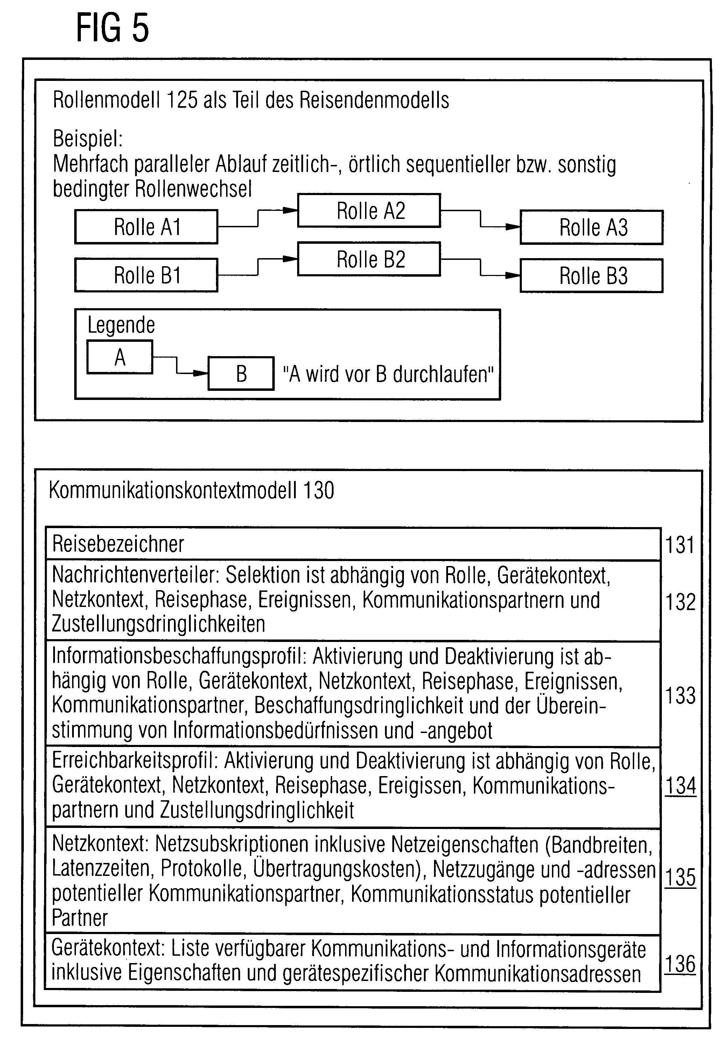

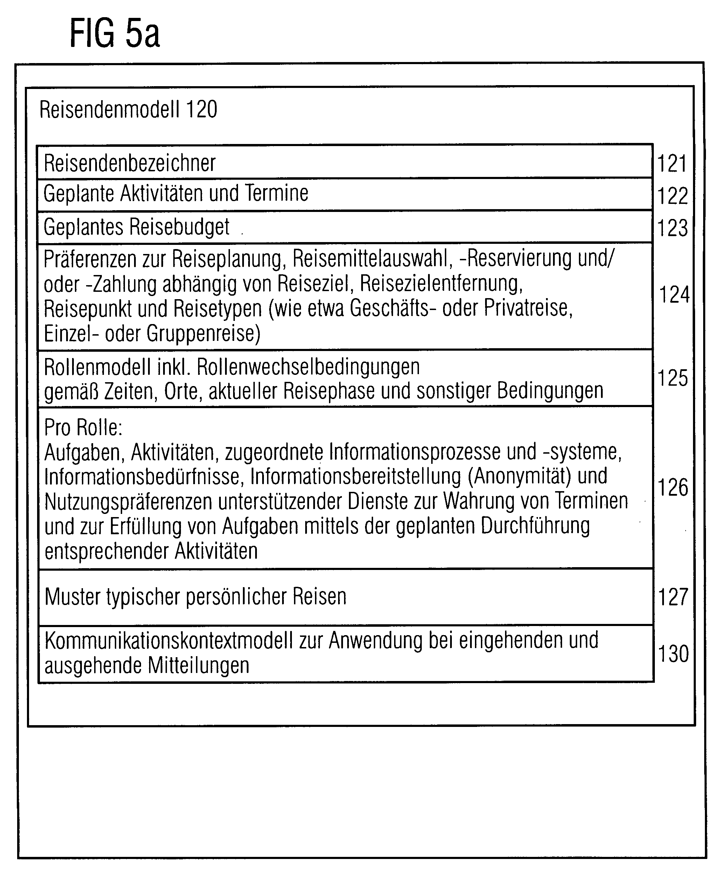

Figuren 5,5a zeigen eine Beispiel für einen Rollenwechsel von einer Rolle A1 eines Reisenden (beispielsweise eine geschäftliche Reise- wobei geschäftlich der Rolle A1 entspricht), eine kurze Urlaubsreise (privat = Rolle A2) und einen darauf folgender weiterer geschäftlicher Reiseabschnitt (in der Rolle geschäftlich = A3). Figur 5 zeigt Beispiele für in Modell eines Reisenden einfügbare Daten wie beispielsweise Aktivitäten und Termine, Reisebudget, Präferenzen zur Reiseplanung, Reisemittelauswahl, Reservierung, Zahlung abhängig von Reiseziel, Reiseentfernung, Reisezeitpunkt, Reisetyp etc..

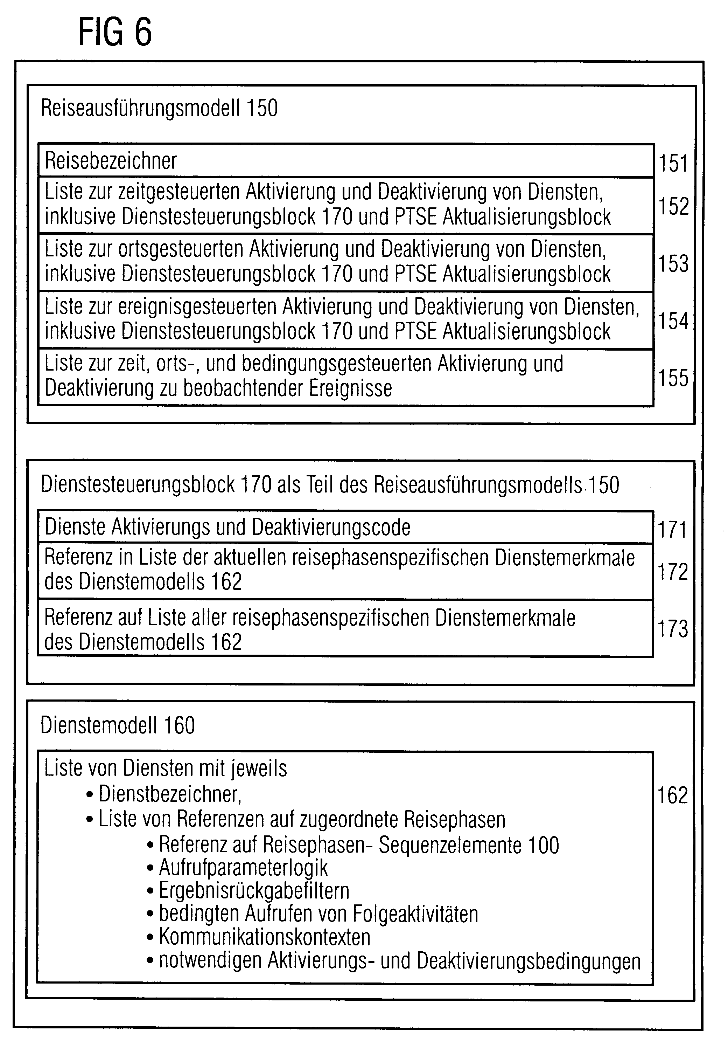

Figur 6 zeigt ein Datenmodell zum Reiseabschnittserreichbarkeitssteuerungsdaten umfassenden Reiseausführungsmodell.

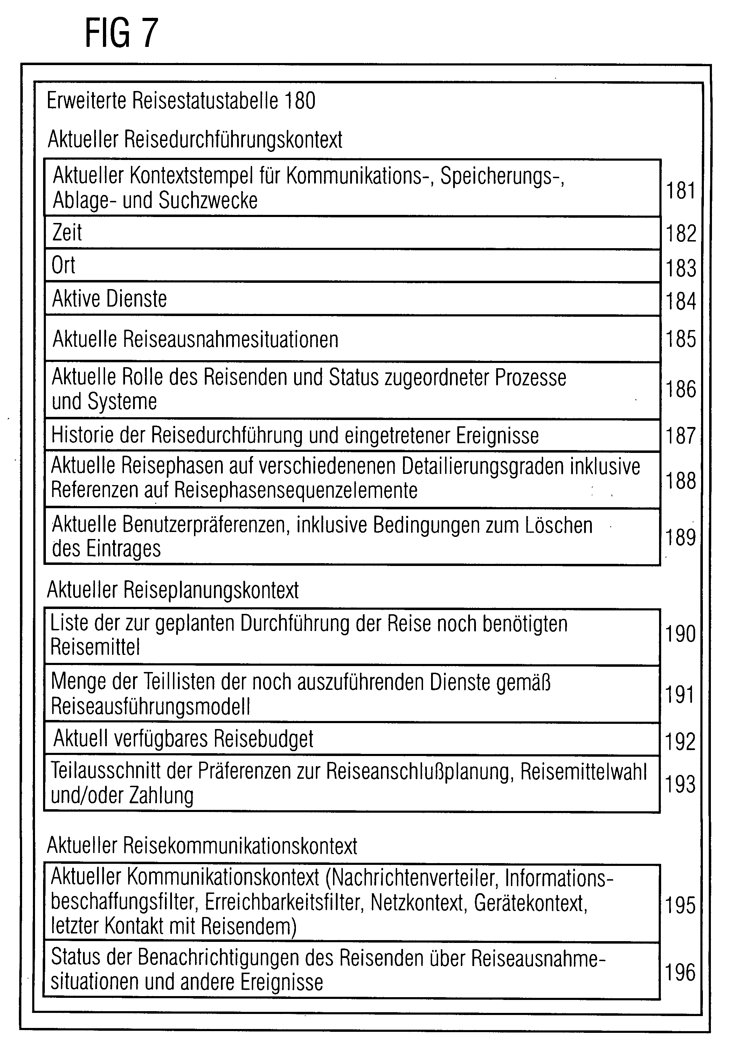

Figur 7 zeigt ein Datenmodell einer Reisestatustabelle, welche aktuelle Angaben zum Stand der Reise des Reisenden umfaßt, wie Angaben zu Zeit, Ort, aktiven Diensten, Reiseausnahmesituation (welche Umbuchungen erforderlich machten oder machen werden etc.).

Pro-aktive (=kontinuierlich automatisch ablaufende) Rechenprozesse in elektronischen Informationssystemen vergleichen zur Bereitstellung des Erreichbarkeitsdienstes den Sollverlauf einer Reise mit dem wirklichen Reisefortschritt eines Reisenden. Auf Basis dieser Information werden die reisephasenspezifischen Funktionen des Erreichbarkeitsdienstes gesteuert.

Der Sollablauf einer Reise wird vom elektronischen Informationssystem auf Basis eines Modells der persönlichen geplanten Reise simuliert und mit dem tatsächlichen Reisefortschritt abgeglichen. Das Reisemodell beschreibt dazu die einzelnen aufeinanderfolgenden Phasen (Abschnitte) einer geplanten Reise. Die geplanten Reisephasen sind durch einen zeitlichen Sollverlauf in Kombination mit einem örtlichen Sollverlauf der Reise spezifiziert.

Wesentliche Komponente des im folgenden geschilderten Verfahrens zur reisephasenspezifischen Modellierung und Steuerung des Erreichbarkeitsdienstes ist eine ,Personal Trip Communication Support Engine' (=PTCSE 4= Vorrichtung und/oder Verfahren zur individuellen Kommunikations- Unterstützung eines Reisenden während einer Reise), welche die Steuerung und Bereitstellung reisebezogener Erreichbarkeitsdienste ermöglicht.
Auch die effiziente Bereitstellung eines solchen Massendienstes ist ein Merkmal des beschriebenen Ausführungsbeispiels. Die PTCSE ist damit ein informationsverarbeitendes und kommunizierendes System, welches reisephasenbezogene Kommunikationsdienste gemäß dem in der vorliegenden Erfindungsmeldung beschriebenen Verfahren sehr effizient einer Vielzahl von Reisenden bereitstellt.

Die PTCSE kommuniziert mit dem Reisenden unter Verwendung von mobilen und festnetz-gebundenen Kommunikationsendgeräten, mittels synchronen und asynchronen, sowohl durch das Kommunikationsendgeräte als auch durch die Kommunikationsserverseitige PTCSE initiierte Protokolle.

Für den praktischen Einsatz ist die PTCSE an existierende Kommunikationssysteme und Informationsverarbeitungssysteme anzuschließen. Die PTCSE ist in ein beliebiges Kommunikations-Portal integriert. An dieses Portal sind (z.B. über mobile und/oder Festnetz-basierte)Kommunikationsnetze festnetzgebundene und mobile Kommunikations- und Informationsendgeräte angeschlossen. Teile der PTCSE können aus Performance- und Verfügbarkeitsgründen auch auf dem mobilen Endgerät ausgeführt werden. Zusätzlich ermöglicht die PTCSE die Nutzung zustandsloser "typischer browserbasierter" mobiler Endgeräte (92).

Die PTCSE wird durch Reisebuchungssysteme über getätigte Buchungen gemäß Abbildung 2 (5) informiert und angestoßen (10). Daraufhin erzeugt die PTCSE im Zuge einer Analyse- und Initialisierungsphase, ein statisches Modell des Reisenden (15, 120, s.a. Figur 1, 10), ein statisches Modell der gebuchten Reise (20, 100, s.a. Figur 1, 9) und leitet aus diesen Modellen das statische Reiseerreichbarkeits-Steuerungsmodell (25, 150, s.a. Figur 1, 8,19) ab.

Teilverfahren zur Generierung eines situationsbezogenen Reiseerreichbarkeitsmodells aus fragmentierten Datensätzen gemäß dem beschriebenen Ausführungsbeispiel:

Eine geplante persönliche Reise wird mit ihren Buchungsdatensätzen unter Verwendung eines Informationssystems erfasst und durch dieses IT-System, im weiteren Personal Trip Communication Support Engine (PTCSE) genannt, in geordnete Sequenzen von Reisephasen (Reisemodell) gegliedert. Die Ordnung der Sequenzen ergibt sich dabei primär aus den zeitlichen und räumlichen Attributen der geplanten Reiseaktivitäten, unter anderem der geplanten Nutzung von gebuchten Reiseresourcen. Die Sequenzen der Reisephasen werden in elektronischer Form im Speicher der PTCSE als statisches Reisemodell abgelegt.

Aus dem Reisemodell und dem Modell des Reisenden wird das Reiseerreichbarkeits-Steuerungsmodell generiert. Während der Ausführung der Reise durch den Reisenden wird dieses Reiseerreichbarkeits-Steuerungsmodell abgearbeitet. Die im Reiseerreichbarkeits-Steuerungsmodell mit den einzelnen Reisephasen verknüpften elementaren Erreichbarkeitsfunktionen werden während dem Durchlaufen des entsprechenden Reiseabschnittes aktiv.

Im Zuge von Reiseanschlußplanung oder der Neuplanung der Reise kann diese Reiseerreichbarkeits-Steuerungsmodell von der PTCSE dynamisch ergänzt oder typischerweise teilweise ersetzt werden.

### Charakteristika des Verfahrens:

### Ausführungsschritte:

- Die Erstellung des Reisemodells (100), des Modells des Reisenden (120) und des daraus abgeleiteten Reiseerreichbarkeits-Steuerungsmodells (150) erfolgt automatisch im Zuge der Verarbeitung der Buchungsdaten des Reisenden (200, 10, 11) durch die PTCSE. Die einzelnen Schritte des Verfahrens zur Erstellung eines Reiseerreichbarkeits-Steuerungsmodell (150) sind im folgenden beschrieben.

### 1. Aufbau des Modell des Reisenden (15):

- Benutzerprofile und explizite Benutzervorgaben initialisieren das Modell des Reisenden mit statischen Daten. Ergänzungen des Modells werden über Personal Information Management Systeme eingelesen. Das Modell des Reisenden beinhaltet:
   - die geplanten und aktuell verwendeten mobilen Kommunikationsgeräte (136),
   - dem geplanten und aktuellen Kommunikationskontext (130) (Erreichbarkeitsprofil (134), Kommunikationsnetzzugang (135), Kommunikationskostenprofil (135), Erreichbarkeitsprofilen von Kommunikationspartnern (135)),
   - der geplanten und aktuellen Rolle des Reisenden (126) (anonym, nicht anonym, Geschäftreisenden, Privatreisender, Besprechungsteilnehmer, Hotelgast, Passagier, Fahrzeugführer) und hiervon
   - ableitbaren rollen-, orts- und zeitabhängigen Informations- und Kommunikationsbedürfnisse (126)
- Im Benutzerprofil (300) der PTCSE stehen Präferenzen und Vorgaben für
   - Benutzerspezifische Orte und relative Zeitangaben für die Erreichbarkeit in Relation zu typischen Reisephasen wie z.Bsp.: zu Reisebeginn oder zum Ende der Reise.
   - Präferenzen für die Nutzung von Reiseresourcen (124) in Abhängigkeit von Reiseziel, Reisezielentfernung, Reisezeitpunkt und Reisetypen (wie etwa Geschäfts- oder Privatreise, Einzel- oder Gruppenreise),
   - Muster für typische persönliche Reisen (127) (Sequenzen von Reisephasen)

### 2. Aufbau des Reisemodells (20):

Die PTCSE liest zunächst Buchungsdatensätze (200), Informationen aus persönlichen Informationmanagementwerkzeugen (PIM) (210) und Benutzervorgaben (310, 340) ein. Die Buchungsdatensätze und die PIM-Daten initialisieren das Modell der Reise (100).

### Auswahl einzelner Reisephasenmuster und typischer Sequenzen:

Die PTCSE wählt für das Modell der Reise ein passendes Reisephasenmuster aus einer vorgegebenen Menge von Reisephasenmustern aus. Es werden hierzu typische Reisephasenmuster von dem Reiseerreichbarkeitsdiensteanbieter in der PTCSE hinterlegt und vorgegeben. Im folgenden sind einige typische Reisephasenmustern aufgezählt
Reisebeginn, Am Wohnort zu Beginn der Reise, Weg vom Wohnort zum Abflug-Flughafen zu Beginn der Reise, An der Arbeitsstelle zu Beginn der Reise, Weg von der Arbeitsstelle zum Abflug-Flughafen zu Beginn der Reise, Am Abflug-Flughafen, Im Flieger, Am Ziel-Flughafen, Auf dem Weg zum Hotel, Im Hotel, Auf dem Weg zur Besprechung, Weg zum Abflug-Flughafen während der Rückreise, Am Abflug-Flughafen während der Rückreise, Im Flieger während der Rückreise, Am Ziel-Flughafen während der Rückreise, Weg zur Arbeitsstelle während der Rückreise, An der Arbeitsstelle nach der Rückreise, Weg zum Wohnort während der Rückreise, Am Wohnort nach der Rückreise.

Die Auswahl einer Menge von Reisephasenmustern, welche die gebuchte Reise am besten abbilden, kann durch manuelle Eingaben des Reisenden oder des Erreichbarkeitsdiensteanbieters unterstützt werden. Ein Erreichbarkeitsdiensteanbieter kann die Menge der vorgegebenen Reisephasenmuster ergänzen. Damit das beschriebene Auswahlverfahren automatisch, bzw. mit geringer Unterstützung des Reisenden funktioniert, müssen entsprechende Selektionsmerkmale in den Buchungsdatensätzen implizit enthalten, oder durch den Erreichbarkeitsdiensteanbieter mit den Buchungsdatensätzen verknüpft worden oder implizit durch das Modell des Reisenden vorgegeben sein. Vorgaben für typische Reisephasemuster im Modell des Reisenden beeinflußt also den Aufbau des Reisemodells.

Typische Modelle "ähnlicher" Reisen für bestimmte Typen von Reisenden können vom Erreichbarkeitsdiensteanbieter als Schemas (nicht instanziierte Sequenzen von Reisephasen) vorgegeben und in der PTCSE abgelegt werden. Die PTCSE und der Reisende können dann gebuchte Reisen mit den vorgegebenen Schemas vergleichen und verknüpfen.

Reisephasen werden auf unterschiedlichen Detailebenen modelliert und abgearbeitet. Zudem läßt sich eine Reisephase hierarchisch in Sub-Reisephasen zergliedern. Typischerweise reicht zur Steuerung der Erreichbarkeit die Modellierung der Reisephasen auf zwei oder drei unterschiedlichen Verfeinerungsgeraden aus.

### Reisephasenattribut Reisemittel:

Ein wesentliches Selektionsmerkmal zur Identifizierung von passenden Reise-phasenmustern aus einer Menge von vorgegebenen Reisephasenmustern ist die verwendete Reiseresource, die während einer Reisephase überwiegend genutzt wird (z.Bsp.: Flugzeug, Kfz, S-Bahn, zu Fuß,...). Diese Reiseresource wird beim Einlesen von Buchungsinformationen als Attribut erfaßt und kann daher mit dem entsprechenden Attribut der vorgegebenen Reisephasenmusters verglichen werden.

Innerhalb einer Reisephase wird typischerweise ein Reisemittel hauptsächlich genutzt. Zusätzlich zu dieser Hauptresource sind auch abhängige Reiseresourcen im Reisemodell darstellbar.

Z. Bsp.: Ein Gate ist eine einem Flug zugeordnete abhängige Resource, deren Verfügbarkeit und Wert OnTrip festgestellt werden muß.

### Reisephasenattribut Reisemittelanbieter:

Ein weiteres wesentliches Selektionsmerkmal zur Identifizierung von passenden Reisephasenmustern aus einer Menge von vorgegebenen Reisephasenmustern ist der Reisemittelanbieter. Der Reisemittelanbieter wird beim Einlesen von Buchungsinformationen als Attribut erfaßt und belegt daher das entsprechenden Attribut des vorgegebenen Reisephasenmusters im Reisemodell. Die Verfügbarkeit bestimmter Kommunikationstechnologien ist mit Reisemittelanbietern verknüpft. Hier wäre z. B. die Verfügbarkeit von Internet-Zugängen bei der Nutzung von Fliegern bestimmter Luftfahrtgesellschaften wäre hier zu nennen.

### Übersetzung von Buchungsdaten in Reisephasenbeschreibung:

1. Die PTCSE liest Informationen aus den vorliegenden Buchungsdatensätze ein. Da diese Buchungsdatensätze gemäß den Vorgaben vielfältiger Reiseagenturen und Buchungssysteme erstellt wurden, müssen sie durch die PTCSE in ein einheitliches Format (generisches Buchungsdatenformat) übersetzt werden. Die Buchungsdatensätze können zu diesem Zweck in vielfältiger elektronischer Weise in die PTCSE übernommen werden.
2. Die PTCSE trägt die im generischen Buchungsdatenformat vorliegenden Werte eines Buchungsdatensatzen in die Attribute der ausgewählten Reisephasenmuster ein.

### Reisephasenattribute Start- und Zielort, bzw. Start- und Landezeitpunkt:

- Beispiel: Nach dem Einlesen von Personal Name Records (PNRs), liegen diese im generischen Buchungsdatenformat vor. Eine Flug-Reisephase beinhaltet die Attribute Start- und Zielort, bzw. Start- und Landezeitpunkt. Diese Attribute werden mit den Werten aus dem generischen Buchungsdatenformat der PNRs belegt.
- Die belegten (instanziierten) Attribute eines Reisephasenmusters bilden das Reiseerreichbarkeits-Steuerungsmodell auf eine konkret geplante und gebuchte Reise ab. D.h. die mit einer Reise verbundenen Buchungsdatensätze für Reisemittel instanziieren das Modell einer geplanten Reise und definieren damit die zeitlichen und örtlichen Vorgaben im Sollverlauf der gebuchten Reise.

### Aufbau der Sequenz der Reisephasen:

Die Reisephasen werden nun von der PTCSE gemäß des hierarchischen Verfeinerungsgerades sortiert, und in Sequenzen von Reisephasen verschiedener Detaillierungsgrade angeordnet. Anhand der zeitlichen und räumlichen Ordnung der aus konsistenten Buchungsdaten abgeleiteten Reisephasen können diese von der PTCSE in eine Sequenz gebracht werden. Typischerweise reicht zur Steuerung der OnTrip (während der Reise abrufbaren) Services die Modellierung der Reisephasen auf zwei oder drei unterschiedlichen Verfeinerungsgeraden aus.

### 3 . Aufbau des Reiseerreichbarkeits-Steuerungsmodells:

- Pro-aktive Dienste (Dienste die in einem Push- Verfahren arbeiten) binden nun Erreichbarkeitsfunktionen an das Durchlaufen bestimmter Reisephasen. Erreichbarkeitsfunktionen können dabei auch an mehrere Reisephasen und zeitlich oder örtlich relativ an das Durchlaufen von Reisephasen gebunden werden.
- Das so ergänzte Reiseerreichbarkeits-Steuerungsmodell wird in Datenstrukturen übersetzt, die bei der Steuerung der Dienste während der Reise effizient interpretiert werden können.

### Weitere Merkmale des Verfahrens:

- Ändern sich die Buchungen, dann wird die PTCSE von den angeschlossenen Buchungssystemen entsprechend informiert. Die PTCSE berechnet dann Teile des Reisemodells neu. Entsprechend wird das Reiseerreichbarkeits-Steuerungsmodell teilweise neu aufgebaut.
- Die automatisch erstellten Reisephasen und die daran gebundenen Erreichbarkeitsfunktionen werden miteinander assoziiert und gegebenenfalls durch den Reisenden unter Nutzung von Admininstrationswerkzeugen ergänzt und verfeinert. Wird eine Erreichbarkeitsfunktion lediglich in einer sehr speziellen Reisephase (detaillierter Teilprozess) aktiv, so muss die entsprechende Reisephase hinreichend genau modelliert und das entsprechende Muster verfügbar sein.
- Die Rollen, die ein Reisender im Zuge der Reisens ausübt, sind mit rollenspezifischen Erreichbarkeitsbedürfnissen verknüpft und werden mit den Reisephasen verknüpft, in denen der Reisende in der gegebenen Rolle aktiv ist.
- Für die Generierung des Reiseerreichbarkeits-Steuerungsmodells ist eine unvollständige lückenhafte Sequenz von Reisephasen ausreichend, solange es keine Wiedersprüchen in den Buchungsdatensätzen gibt. Schon die Instanziierung einzelner Reisephasen ermöglicht die situationsbezogene Reiseerreichbarkeit. Insbesondere schlägt die PTCSE zur Vervollständigung des Reiseerreichbarkeits-Steuerungsmodells persönliche Vorgaben, bzw. falls diese nicht vorhanden sind, Systemvorgaben vor. Diese Defaults kann der Benutzer durch persönliche Erreichbarkeits-Vorgaben in seinem Profil ergänzen.

### Detaillierte Erläuterung dises Ausführungsbeispiels anhand der Abbildungen:

- Die PTCSE wird also durch Reisebuchungssysteme über getätigte Buchungen gemäß Abbildung 2 (5) informiert und angestoßen (10). Daraufhin erzeugt die PTCSE im Zuge einer Analyse- und Initialisierungsphase, ein statisches Modell des Reisenden (15, 120), ein statisches Modell der gebuchten Reise (20, 100) und leitet aus diesen Modellen das statische Reiseerreichbarkeits-Steuerungsmodell (25, 150) ab.
   - Das statische Modell der gebuchten Reise(100) besteht aus der Sequenzen der von der PTCSE aus den Buchungsdaten abgeleiteten bzw. der ausgewählten ergänzenden Reisephasen (100). Allgemein könnten im Reisemodell (100) beliebige rekursiv verfeinerte Sequenzen von Reisephasen modelliert werden. In der Praxis reichen jedoch typischerweise drei Detailstufen aus. Die modellierten Reisephasen (110) beinhalten Attribute, wie z. B.: die an diese Reisephasen gebundenen, notwendigen bzw. nutzbaren Reisemitteln (115). Attribute einzelner Reisephasen werden dabei mit Benutzerereichbarkeitsprofilen und -präferenzen aus dem Modell des Reisenden (120) belegt. Die Bereitstellung der auf die Bedürfnisse des Reisenden zugeschnittener Erreichbarkeitsfunktionen kann damit reisephasenbezogen geplant werden.
   - Das Modell des Reisenden (120) wird weiter unten erläutert.
   - Das statische Reiseerreichbarkeits-Steuerungsmodell (150) steuert die Bereitstellung der gewünschten Reisedienste synchron zur Durchführung der Reise durch den Reisenden. Das heißt, das die Bereitstellung der auf die Bedürfnisse des Reisenden zugeschnittener Erreichbarkeitsfunktionen, synchron zum tatsächlichem Durchlaufen der Reisephase erfolgt.
- Zum Aufbau des Reiseerreichbarkeits-Steuerungsmodells werden alle Erreichbarkeitsfunktionen für die zeitlich und örtlich gesteuerte Ausführung synchron zur geplanten Durchführung der Reisephasen vorkonfiguriert (152, 153, 154, 155). Das bei der Planung der Reisedurchführung vorliegende Wissen (200, 210, 300, 400) über die gebuchte Reise und den Reiseprozess wird also in Laufzeitstrukturen (150) zur Steuerung der synchron zur Reisedurchführung bereitgestellten Erreichbarkeitsfunktionen compiliert. Dieser Systemprozess verwendet eine Menge von Regeln (440), die den Beginn, das Ende (152, 153, 154, 155), und die konkreten Erreichbarkeitsfunktionen im Kontext der aktuellen Reisesituation (z.B.:
   - Mit dem reiseabschnittsspezifischen Kommunikationskontext verbundene Weiterleitung der eingehenden Anrufe bzw. entsprechender Benachrichtigungen,
   - Mit der aktuellen Rolle assoziierte Anruferlisten,
   - Zeiten der nächsten Wiederereichbarkeit (wieder eintretenden Erreichbarkeit) gemäß nachfolgender Reiseabschnitte,
   - Eigenschaften der Kommunikationsmittel (Endgeräte und Netzkontext) bei der nächsten Wiederereichbarkeit gemäß nachfolgender Reiseabschnitte, inklusive der Steuerung davon abhängiger Rückrufverfahren
   - Überwachung der Verfügbarkeit relevanter Kommunikationsnetze,
   - Anruferspezifischer Typ der Rückmeldung,
   - Anruf Logging und Anlegen der für den Benutzer sichtbaren Liste eingehender Anrufe indiziert mit dem aktuellen Reisekontext)
in Abhängigkeit von
- Servicepräferenzen des Reisenden (124, 125, 126, 130),
- zeitlichen und örtlichen Parameter einer Reisephase (112,113),
- relativen und absoluten Zeiten und Orte (112,113),
- dem potentiellen Eintreffen von für die Durchführung der persönlichen Reise relevanten Ereignissen (118),
- Buchungstypen (124),
- verwendeten Reisemitteln (115) und
- Reisetypus (410, 420, 310, 320, 330, 127)
beschreiben. Die verwendeten Regeln werden typischerweise vom Betreiber des Systems vorgegeben (430, 440). Darüber hinaus können Regeln vom Endbenutzer aktiviert bzw. deren Regelmuster parametrisiert werden.
- Die PTCSE legt also vor dem Beginn der Bereitstellung von Reisediensten eine Struktur zur zeit-, orts-, und/oder ereignisgesteuerten Ausführung von Erreichbarkeitsdiensten (150) an. Wird die Reise wie geplant durchgeführt, dann beinhaltet die statische Datenstruktur des Reiseerreichbarkeits-Steuerungsmodells (Sequenz von Dienstaktivitäten mit verknüpften Sollwerten zur zeit-, örtlichen- und/oder ereignisgesteuerten Steuerung der Erreichbarkeitsdienste) alle zur Steuerung der reisephasenspezifischen Dienste notwendigen Daten. Zur Aktivierung und Deaktivierung von Diensten reicht dann ein Vergleich der Variablen in der erweiterten Reisestatustabelle (180, 182, 183, 184) mit den dienstspezifischen Konstanten im Reiseerreichbarkeits-Steuerungsmodell (152-155) aus. Das heißt, das Anlegen dynamischer Datenstrukturen zur Steuerung der Erreichbarkeitsdienste ist nicht zwingend erforderlich. Es können also sehr effizient verarbeitbare und damit massendienstfähige Laufzeitdatenstrukturen zur Steuerung der Erreichbarkeit verwendet werden.
- Während der Durchführung der Reise überprüft die PTCSE durch Vergleiche von Elementen der erweiterten Reisestatustabelle mit den entsprechenden Vorgaben des statischen Reisemodells, ob die Sequenz der Reisephasen wie geplant durchlaufen wird. Hierzu werden laufend Uhrzeit, Ortsinformationen, Prozeßinformationen von Backend-Systemen (185, 186, 187, 188) und Benutzereingaben ausgewertet und als Istwerte mit den zeitlichen, örtlichen, und Prozessparameter Sollwerten der Reisephasen im Reisemodell (100, 111, 112, 113, 114, 115, 116, 117, 118) verglichen.
- Passen ein oder mehrere Istwerte mit den vorgegeben Sollwerten genau einer Reisephase überein, so kann die aktuelle Reisephase während der Durchführung der Reise eindeutig identifiziert werden. Durch die streng geordnete Sequenz der Reisephasen (100) ist dieser Fall typischerweise gegeben. Zur Klärung verbleibender Mehrdeutigkeiten oder Widersprüche, z.B. falls der Reisende anders reist als geplant, kann die PTCSE die aktuelle Reisephase (188) beim Reisenden erfragen. Gegebenenfalls wird eine PTCSE- Ausnahmesituation festgestellt und ein Wiederaufsetzen des Systems mit entsprechender Neuanlage der verwendeten Modelle ausgelöst.
- Im Fall von Reiseausnahmesituationen, und damit einhergehenden spontaner Reise-Umplanungen/-Umbuchungen wird die Bereitstellung der Reisedienste unterbrochen, das statische Reiseerreichbarkeits-Steuerungsmodell ganz oder teilweise aktualisiert und ersetzt, und schließlich die Bereitstellung der Reisedienste fortgeführt.
- Die PTCSE verwaltet während der Bereitstellung der persönlichen Reisedienste ein Modell des Reisenden (120). Dieses Modell wird durch Informationen aus dem Benutzerprofil (300) und den aus Personal Information Management Systemen (210) eingelesenen Terminen (Orte und Zeiten), geplanten Aktivitäten und Kontakten (Orte und Namen) initialisiert. Diese konkreten Daten (121, 122, 126) werden rollenspezifisch im Reisendenmodell organisiert. Eine Rolle (110) definiert dabei einen allgemeiner gültigen Informationsbedürfnis-, Aktivitäts- und Kommunikationskontext eines Reisenden. Dynamische Aktualisierungen von Daten des Reisendenmodells, während der Durchführung der Reise, werden in der erweiterten Reisestatustabelle (180) bereitgestellt. Das Modell des Reisenden beinhaltet:
   - Namen, Adressen und Firmenzugehörigkeit des Reisenden (121)
   - Angaben zu den während der Reise zur Kommunikation potentiell nutzbaren Kommunikationsnetzen (Netzkontext: 135), inklusive Netzzugangsarten und Kommunikationskostenprofilen, und mobilen Endgeräten (Gerätekontext: 136),
   - Angaben zur Steuerung der Erreichbarkeit im Falle typischerweise auftretender Kommunikationskontexte
      - Ein-/Ausschalten der Weiterleitungsfunktion,
      - Konfiguration der Anrufweiterleitung zu bestimmten Kommunikationsendgeräten
      - Parameter (Zieladressen, Nachrichtentyp) und Bedingungen (Zeitpunkt, aktueller Reiseabschnitt) beim Verschicken von Benachrichtigungen an Reisende im Fall von eingehenden Anrufen
   - die Rollen und Rollenwechsel des Reisenden (125, 126) (Z.B.: anonym, persönlich, Käufer, Geschäftreisenden, Privatreisender, Besprechungsteilnehmer, Hotelgast, Passagier, Fahrzeugführer) und
   - geplante Aufgaben, Aktivitäten und Termine (122, 123) und ableitbarer rollen-, orts- und zeitabhängige Erreichbarkeitsbedürfnisse (126)
   - Präferenzen für die Nutzung von Reiseresourcen in Abhängigkeit von Reiseziel, Reisezielentfernung, Reisezeitpunkt und Reisetypen (wie etwa Geschäfts- oder Privatreise, Einzel- oder Gruppenreise) (124)
- Änderungen der Servicebedürfnisse im Modell des Reisenden können eine Neukonstruktion des Reiseerreichbarkeits-Steuerungsmodells (150) nach sich ziehen.
- Im Benutzerprofil (300) der PTCSE stehen Präferenzen (340) für
   - Benutzerspezifische Orte und relative Zeitangaben welche typische Erreichbarkeitsfunktionen in Relation zu typischen Reisephasen wie z.Bsp.: zu Reisebeginn oder zum Ende der Reise auslösen.
   - Präferenzen für die Nutzung von Reiseresourcen in Abhängigkeit von Reiseziel, Reiseziel-entfernung, Reisezeitpunkt und Reisetypen (wie etwa Geschäfts- oder Privatreise, Einzel- oder Gruppenreise),
   - Muster für typische persönliche Reisen (Sequenzen von Reisephasen) (310, 320, 330)

Bemerkung: Die PTCSE ermöglicht dem Reisenden das temporäre an die Reisephasen-durchführung gebundene Überschreiben und Ablegen persönlicher Erreichbarkeitspräferenzen (189) in der erweiterten Reisestatustabelle. Nach Ablauf einer Reisephase oder der gesamten Reise gelten wieder die im Benutzerprofil (300) voreingestellten Erreichbarkeitspräferenzen.

Teilverfahren zur Steuerung situationsbezogener Erreichbarkeitsdienste für Reisende:

Die PTCSE arbeitet während der Bereitstellung des Erreichbarkeitsdienstes die Reiseerreichbarkeits -Steuerungstabelle (150) ab.

Das Verfahren verwendet zusätzlich zu Ortsinformationen (113, 183) zeitliche Informationen (112, 182) zur Identifikation der aktuellen Reisephase innerhalb der Sequenz von Reisephasen (110) zur geplanten Durchführung der Reise. Die aktuelle Reisephase (188), deren Verfeinerungen und Attribute, und eine Referenz auf die aktuelle Reisephase als Element der Sequenz der Reisephasen im Reisemodell (100, 188)) wird dabei zusätzlich zum Reiseerreichbarkeits-Steuerungsmodell (150) in einer erweiterten Reisestatustabelle (180) abgelegt. Die PTCSE nimmt dabei an, dass sich der Reisende zu einem bestimmten Zeitpunkt in einer bestimmten auf verschiedenen Detailebenen modellierten Reisephase (110) oder aber in einer entsprechenden von der PTCSE abgeleiteten Reisezwischenphase befindet. Die bereitgestellten Erreichbarkeitsfunktionen (150) sind mit der, in der erweiterten Reisestatustabelle ausgewiesenenen, aktuellen Reise(zwischen)phase (188) und den während der Planung vorkonfigurierten Ereignissen (152-155) verknüpft. Das Eintreten von Ereignissen (152-155) löst gegebenenfalls die Ausführung reisephasenspezifischer Erreichbarkeitssteuerungsaktivitäten (152-155) aus.

Erreichbarkeitssteuerungsaktivitäten werden im Dienstemodell(160) an Bedingungen gebunden (150, 152-155) und der PTCSE zur bedingten Ausführung übergeben.
Zusätzlich können reisephasengebundene Parameter (117) an Erreichbarkeitsfunktionen übergeben werden.

Die Steuerung wirkt sich dabei auf folgende Funktionen der Dienste aus.
- Aktivierung und Deaktivierung von Erreichbarkeitsfunktionen (152-154). Erreichbarkeitsfunktionen deren Ausführung und Deaktivierung an das Erreichen bestimmter Reisephasen gebunden sind ermöglichen einen effizienten Einsatz der Rechen- und Speicherkapazitäten der PTCSE. Dieses Merkmal umfaßt auch die Ausführung in Abhängigkeit von der zeitlich und örtliche relative Nähe zu bestimmten ausgezeichneten Reisephasen. Dies gilt besonders für Pro-aktive Dienste, die unabhängig vom aktuellen Bedarf des Reisenden, im System ausgeführt werden.
- Reisekontextbezogene Parameterisierung der Erreichbarkeitsfunktionen wird durch zwei PTCSE-Verfahren unterstützt.
   1. Erreichbarkeitsfunktionen welche Variablen der erweiterten Reisestatustabelle (180) auslesen, verarbeiten direkt den aktuellen Reisekontext.
   2. Erreichbarkeitsfunktionen können unter Nutzung der reisephasenspezifischen Modellreferenzen (172, 173, 162), reisephasenspezifische Informationen nutzen und spezifische Vor- und Nachbearbeitung. Der Kern der Erreichbarkeitslogik bleibt davon unberührt.
- Informationsspeicherung zu Abrechnungs- und Verifikationszwecken (Logging) als auch die Abspeicherung persönlicher reisebezogener Ruflisten erfolgt unter Verwendung des Reisekontextstempels (181).

### Charakteristika des Reiseerreichbarkeits-Steuerungsverfahrens:

- Die PTCSE arbeitet pro-aktiv die im Reiseerreichbarkeits-Steuerungsmodell aufgelisteten Dienste gemäß der assoziierten Bedingungen ab. Dies erfolgt parallel zur Duchführung der eigentlichen Reise durch den Reisenden.
- Die PTCSE ermittelt anhand des zeitlichen, räumlichen und Prozess-Fortschritts innerhalb des referenzierten Reisemodells (100) eine für den Reisenden als "aktuell" angenommene Reisephase (182, 183, 188). Auch auf Basis von aktuellen Aufenthalts- und Prozesstatusinformationen des Reisenden (186), welche die PTCSE während der Reise über angeschlossene Backend-Systeme ermittelt, kann das System die Reisesimulation mit der tatsächlichen Durchführung der Reise abgleichen.
- Der Reisende und der Betreiber können die aktuell durch das System, als für den Reisenden "aktuell" angenommene, Reisephase (188) korrigieren. (Dies ist ähnlich zur Eingabe einer neuen Position durch den Fahrzeugführers zum Wiederaufsetzen eines Fahrzeugnavigationssystems zu sehen.) Der Reisende wird dazu typischerweise aus der Sequenz der geplanten Reisephasen (100) seine aktuelle Reisephase (110) auswählen und der PTCSE mitteilen.
- Der Reisefortschritt und gegebenenfalls auftretende Abweichungen zwischen der Simulation der geplanten bzw. gebuchten Reise und der tatsächlichen Reise werden aufgrund der Analyse von OnTrip-Informationen während des Fortschritts der tatsächlichen Reise vom Informationssystem erkannt. Dazu wird ab dem Start der Reisedienste (30) der Ist-Ablauf mit dem geplanten Reiseablauf verglichen. Es wird also pro-aktiv vom Rechnersystem die aktuelle Reisephase (188) ermittelt bzw. vorhergesagt.
- Messaging-Dienste von Drittanbietern können durch Nutzung der PTCSE über eine Programmierschnittstelle den aktuellen Erreichbarkeitsstatus (189), und den Kommunikationskontext inklusive Kontaktadressen (186), Kommunikationsnetzeigenschaften in Erfahrung bringen. Diese Dienste können durch die Nutzung dieser Schnittstelle reisephasenspezifisch unterstützt werden. Die Bereitstellung dieser Reisestatusinformationen zur Erreichbarkeit (182-188)) an Applikationen und/oder Backend-Systeme kann in Abhängigkeit von der aktuellen Rolle des Reisenden im Bezug zum Anrufendem erfolgen. In welcher Reisephase welche Rolle ausgeübt wird, wird dabei im Reisendenmodell (125) der PTCSE definiert.
- Damit die PTCSE effizient realisiert werden kann, muß das in der PTCSE verarbeitete modellierte Reisewissen vor Bereitstellung der reisespezifischen Erreichbarkeitsdienste in effiziente Laufzeitdatenstrukturen (150) übersetzt werden, welche dann interpretiert werden.
   - Zentrale Datenstrukturen sind dabei die Listen zur zeit-, und ortsgesteuerten Kontrolle der Erreichbarkeitsfunktionen während der Reise (152-155), inklusive des Erreichbarkeitsdienstesteuerungsblockes (170). Bei der Aktivierung eines Dienstes wird die im Erreichbarkeitsdienstesteuerungsblockes enthaltene Referenz (172) auf die Dienstemerkmale der aktuellen Reisephase (188) innerhalb der Liste aller reisephasenspezifischen Leistungsmerkmale des Erreichbarkeitsdienstemodells (162) gesetzt.
   - Diese wird ergänzt um die Menge der ereignisgesteuerten Erreichbarkeitsfunktionen während der Reise. Hierzu melden sich Erreichbarkeitsfunktionen während der Initialisierung des Systems bei Ereignisverwaltungsdiensten an. Dabei werden durch die Interpretation des Reisemodells (100) insbesondere reisephasenbezogene Ereignisse (118) wie etwa das Erreichen einer bestimmten Reisephase (110) unterstützt.
- Falls keine OnTrip-Informationen dem elektronischen Informationssystem zur Verfügung stehen, kann im einfachsten Fall als Istverlauf, der zeitliche Fortschritt der geplanten gebuchten Reise vom elektronischen Informationssystem verwendet werden.
- Typischerweise reicht für eine benutzerfreundliche Steuerung der Reiseerreichbarkeitsdienste die Modellierung der mit den OnTrip Services verknüpften Reisephasen auf zwei oder drei unterschiedlichen Verfeinerungsgeraden (100) aus.
- Die Abarbeitung einer Reise, modelliert durch Sequenzen von unterschiedlich detaillierten Reisephasen (100) erfolgt dabei quasi parallel in den verschiedenen Detailebenen.
- Wird bei der konkreten Durchführung einer Reise, eine Änderung bei der Durchführung einer geplanten Reisephase notwendig, schlägt die PTCSE Alternativen zur Durchführung der aktuellen bzw. folgender Reisephasen vor, schlägt Änderungen am Reisemodell (15, 20, 25) vor und erfasst die auftretenden Änderungen.

Ein Programmprodukt im Sinne der Ansprüche kann Daten umfassen, die das erfindungsgemäße Verfahren repräsentieren und ausführen lassen und die insbesondere auf einem Datenträger gespeichert oder über ein online- Medium wie Internet übertragbar sein können.

## Patentansprüche

1. Verfahren zur Kontaktaufnahme (1) mit einem reisenden Telekommunikationsteilnehmer (7) über ein von diesem präferiertes Endgerät (5, 6) während einer Reise dieses Telekommunikationsteilnehmers (7),
wobei eine Kontaktaufnahme zu mindestens einem durch Reiseabschnittserreichbarkeitssteuerungsdaten (8,19) für den aktuellen Reiseabschnitt der Reise angegebenen (8,19) Endgerät unter (5,6) durch Reiseabschnittserreichbarkeitssteuerungsdaten (8,19) für den aktuellen Reiseabschnitt vorgegebenen Bedingungen (8,19) versucht wird,
wobei die Reiseabschnittserreichbarkeitssteuerungsdaten (8,19) die Erreichbarkeit (5, 6) des reisenden Telekommunikationsteilnehmers (7) auf Abschnitten einer Reise über eine oder mehrere Endgeräte-Telekommunikationsadressen (8, 19) von Endgeräten (5, 6) unter vorgegebenen Bedingungen (8,19) definieren, welche Endgeräte-Telekommunikationsadressen (8, 19) und Bedingungen (8,19) bestimmt wurden aus zumindest:
- Daten (10, 16, 17, 18) zu Endgerät-Telekommunikationsadressen (5, 6) des Reisenden für Reiseabschnitte (16, 17, 18) und zu Bedingungen (19), unter welchen der Reisende während der Reise erreichbar sein kann,
- sowie aus die Reiseabschnitte der Reise repräsentierenden Daten (9).

2. Verfahren nach Anspruch 1
**dadurch gekennzeichnet,**
**dass** die Reiseabschnittssteuerungsdaten (8) generiert werden aus zumindest:
- jeweils mindestens ein für eine Gattung von Transportmitteln vom Reisenden präferiertes Endgerät und die Transportmittelgattung für die es präferiert wird, repräsentierenden Daten (10) und
- die Gattung von vom Telekommunikationsteilnehmer jeweils während Reiseabschnitten einer Reise geplanten Transportmitteln repräsentierenden Daten.

3. Verfahren nach einem der vorhergehenden Ansprüche,
**dadurch gekennzeichnet,**
**dass** den Sollverlauf der Reise repräsentierende Reisemodell-Daten generiert werden.

4. Verfahren nach einem der vorhergehenden Ansprüche
**dadurch gekennzeichnet,**
**dass** während der Reise Reiseabschnittserreichbarkeitssteuerungsdaten durch Vergleich eines detektierten Istverlaufes der Reise mit einem gespeicherten Sollverlauf der Reise aktualisiert werden und die aktualisierten Reiseabschnittserreichbarkeitssteuerungsdaten für die Bestimmung mindestens einer aktuell jeweils zu kontaktierenden Endgeräts-Telekommunikationsadresse des Reisenden verwendet werden.

5. Verfahren nach einem der vorhergehenden Ansprüche
**dadurch gekennzeichnet,**
**dass** bei der Generierung von die Reiseabschnitte einer Reise modellierenden Daten (9) zumindest Buchungsdaten (14) für diese Reise aus einem Reisebuchungscomputer berücksichtigt werden.

6. Verfahren nach einem der vorhergehenden Ansprüche
**dadurch gekennzeichnet,**
**dass** Präferenzen (16, 18) eines Reisenden und /oder allgemeine Vorgaben für alle Reisenden zur Bestimmung von Präferenzen des Reisenden für Reiseabschnitte der Reise berücksichtigt werden.

7. Verfahren nach einem der vorhergehenden Ansprüche
**dadurch gekennzeichnet,**
**dass** die Daten (10) zu Präferenzen eines Reisenden hinsichtlich in bestimmten Transportmitteln und/oder zu bestimmten Zeitpunkten und/oder unter weiteren Bedingungen bevorzugten Endgeräte-Telekommunikationsadressen umfassen.

8. Verfahren nach einem der vorhergehenden Ansprüche
**dadurch gekennzeichnet,**
**dass** Reisedaten (9) Angaben zu vom Reisenden bevorzugten Transportmitteln, welche bei Umbuchungen zu berücksichtigen sind, umfassen.

9. Verfahren nach einem der vorhergehenden Ansprüche
**dadurch gekennzeichnet,**
**dass** Daten (10) zu Präferenzen des Reisenden Telekommunikationsadressen von Endgeräten (5, 6) des Reisenden, insbesondere Telefonnummern und/ oder E-mail-Nummern, umfassen.

10. Verfahren nach einem der vorhergehenden Ansprüche
**dadurch gekennzeichnet,**
**dass** bei Nicht-Erreichbarkeit des Reisenden an den den Reisenden anrufenden Anrufer (2, 3) eine Empfehlung zu einem Zeitpunkt und/ oder eine Endgeräts-Telekommunikationsadresse des Reisenden gesandt werden, wobei der Zeitpunkt und die Endgeräts-Telekommunikationsadresse unter Berücksichtigung von aufgrund der Reiseabschnittserreichbarkeitssteuerungsdaten (8) absehbaren künftigen Reiseabschnitten und diesbezüglich Präferenzen bestimmt werden.

11. Anordnung(4), insbesondere zur Durchführung des Verfahrens nach einem der vorhergehenden Ansprüche,
- mit einer Schnittstelle zu einer Datenbank mit Daten (10) betreffend Präferenzen eines Telekommunikationsteilnehmers zu während Reiseabschnitten von Reisen präferierten Endgeräte-Telekommunikationsadressen (5, 6) und Bedingungen (19) unter welche der Telekommunikationsteilnehmer eine Kontaktaufnahme zu seinen präferierten Endgerät-Telekommunikationsadressen (5, 6) wünscht,
- mit einer Schnittstelle zu einer Datenbank mit Daten (9) betreffend Reiseabschnitte einer von einem Telekommunikationsteilnehmer geplanten Reise,
- mit einer Einrichtung (20) zum Initiieren einer Kontaktaufnahme zu einem während eines Abschnittes einer Reise dieses Telekommunikationsteilnehmers (7) präferierten Endgerät (5, 6) des Telekommunikationsteilnehmers (7), unter Berücksichtigung von gespeicherten (4) Reiseabschnittserreichbarkeitssteuerungsdaten (8,19) bei der Auswahl des Endgerätes (5, 6), welche (8,19) aufgrund der Daten betreffend präferierte Endgeräte-Telekommunikationsadressen und betreffend (9) Reiseabschnitte der Reise erstellbar sind.

12. Anordnung (4) nach Anspruch 11,
- mit einer Einrichtung (4, 20) zum Bestimmen des Reiseabschnittes der Reise, auf dem sich der Telekommunikationsteilnehmer aktuell befindet.

13. Anordnung (4) nach Anspruch 11 oder 12,
welche eine Datenbank mit Daten (10) betreffend Präferenzen eines Telekommunikationsteilnehmers zu während Reiseabschnitten von Reisen präferierten Endgeräte- Telekommunikationsadressen (5, 6) und Bedingungen (19) unter welche der Telekommunikationsteilnehmer eine Kontaktaufnahme zu seinen präferierten Endgerät-Telekommunikationsadressen (5, 6) wünscht, umfaßt.

14. Programmprodukt, insbesondere Datenträger, zur Durchführung des Verfahrens nach einem der Ansprüche 1-10.
